# EUROPEAN PATENT APPLICATION

(11) **EP 1 025 965 A2**
(43) Date of publication of application: **09.08.2000**
(21) Application number: 00101425.7
(22) Date of filing: 25.01.2000
(51) Int. Cl.: B26F 1/40, B29C 51/44

(54) **Thermoforming machine with an allpurpose cross-cutting system for cross-cutting a plastic sheet or plate material with different widths**

(30) Priority: 03.02.1999 IT MI990202
(71) Applicant: GAM IMPIANTI S.A., 6900 Paradiso (Lugano) (CH)
(72) Inventor: De Nichilo, Giorgio, 20144 Milano (IT)
(74) Representative: Cicogna, Franco

(57) **Abstract**

A thermoforming machine comprises a cutting punch (7) having a length corresponding to the minimum width of a plastic material to be cut through. A drive device (14,15) is provided for driving the punch (7) in a cross direction (F1,F2) to the plastic material (3) being fed, to cover the overall width of the latter. The inventive machine provides the possibility of cutting plastic material plates or coils, even of different widths, by using a single cutting system.

## Description

### BACKGROUND OF THE INVENTION

The present invention relates to a thermoforming machine with an all-purpose cross-cutting system for cross-cutting a plastic material in sheet, plate or coil form.

As is known, sheet plastic material elements are subjected to thermoforming processes, both in plate and coil form, for making articles such as, for example, the counter-doors of domestic refrigerators and the like.

Actually, the molded plastic material plates or coils, coming from the thermoforming station, must be cut along their edge cross-wise to the feeding direction thereof, thereby separating the template from the thermoformed piece. This cutting operation is conventionally performed by using a cutting punch which operates against a corresponding die, in a vertical direction and in a cross direction with respect to the sheet plastic material being fed.

For performing the above mentioned cutting operation, it is necessary that the length of the punch is substantially equal to the width of the plastic material plate or coil in order to prevent undesired drawbacks from occurring. In fact, if the punch would be shorter than the width of the sheet plastic material, then it would not be possible to fully detach from the latter the molded article of manufacture. If, on the contrary, the width of the plastic material plate would be shorter than the corresponding punch, then the latter would interfere against the plastic material conveyor means, and the cutting operation would be impossible.

Thus, conventional cutting systems used on prior thermoforming machines represent great limitations for the operating flexibility of said machines even if these machines include, as conventionally adopted, a varying width conveyor system designed for allowing the machine to be fitted to molded plates or coils of any widths.

Thus, even if, from one side, it is possible to change the size of the conveyor apparatus depending on the width of the material to be processed, on the other side it is not possible to fit different width plates or coils to the length of the cutting system as used in prior thermoforming machines. To achieve this end, prior fitting methods provide to replace the overall die-punch system each time the width of the material to be thermoformed is modified with respect to the starting width thereof.

Such a limitation, as it should be apparent, generates great drawbacks, mainly related to the requirement of providing and preserving a lot of different size punches, in a number corresponding to the possible widths of the plastic material to be processed. In this connection it should moreover be pointed out that the labour required for disassembling the original cutting system and replace it with a different length cutting system would contribute to greatly increasing the making time and cost.

### SUMMARY OF THE INVENTION

Accordingly, the main object of the present invention is to provide a thermoforming machine, for thermoforming plate or sheet or coil material, including an all-purpose cutting system which must not be replaced as the width of the plastic material sheet being processed is changed.

Another object of the present invention is to provide a thermoforming machine which is fully compatible, even with respect to the cutting operations, with a lot of different sizes of the sheet material to be processed or molded.

According to one aspect of the present invention, the above mentioned objects, as well as yet other objects, which will become more apparent hereinafter, are achieved by a thermoforming machine and a thermoforming method as respectively claimed in claims 1 and 8.

Preferred embodiments of the invention are defined in the dependent claims.

With respect to conventional thermoforming machines, the thermoforming machine according to the present invention provides the advantage that it has a great operation flexibility with respect to the size of the sheet material being thermoformed, both with respect to the conveyor system and with respect to the sheet material cutting system.

Actually, the inventive machine provides the advantage that it can cut both plates and coils, even of different width, by using a single cutting system, which must not be replaced as in prior thermoforming machines.

### BRIEF DESCRIPTION OF THE DRAWINGS

The above mentioned features, objects and advantages will become more apparent hereinafter from the following disclosure of a preferred embodiment of a thermoforming machine according to the present invention which has been illustrated, by way of a not limitative example, in the figures of the accompanying drawings, where:
Figure 1 is a top plan view illustrating a conventional thermoforming machine;
Figure 2 is a further top plan view illustrating a thermoforming machine according to the present invention, provided with the mentioned all-purpose cutting system specifically designed for cutting both plate and coil plastic materials;
Figure 3 is a side elevation view illustrating the thermoforming machine of Figure 2; and
Figure 4 illustrates a modified embodiment of the thermoforming machine shown in Figure 3.

### DESCRIPTION OF THE PREFERRED EMBODIMENTS

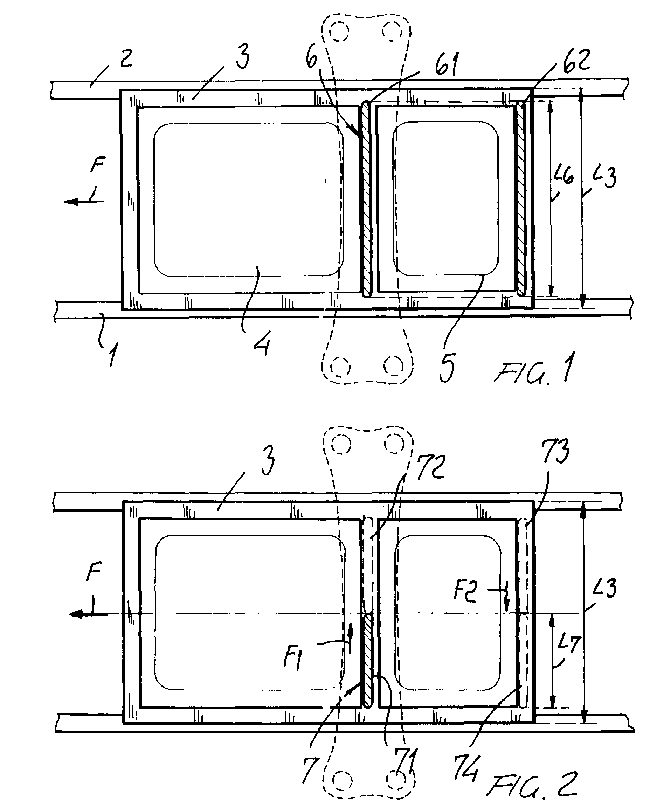

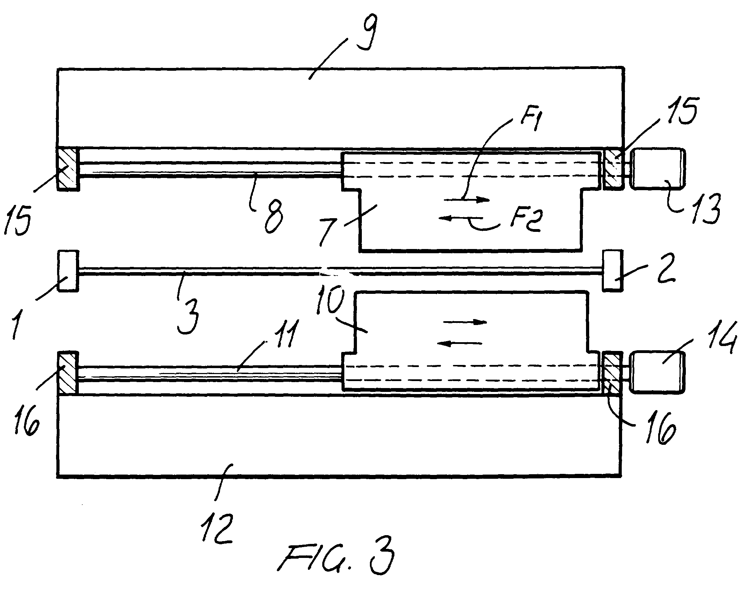

The thermoforming machine of the type the invention is related to are provided with a chain system, including chains 1 and 2 for conveying a sheet plastic material (a plate 3 as shown in the figures). At the outlet of a molding station (not shown), the plate 3 is provided with templates 4 and 5 defining the molded pieces, which will be detached from the starting plate by cutting said plate at the level of its edges (as shown by the dashed lines in Figures 1 and 2). More specifically, the cutting operation must be carried out in a cross direction with respect to the feeding direction of the plate 3 on the chains 1 and 2 (see the arrow F in the figures).

To that end, prior thermoforming machines conventionally comprise a punch 6 which is arranged cross-wise with respect to the plate 3 and the length L₆ of which is substantially equal to the width L₃ of the plate 3 (Figure 1).

Said punch, as applied at the positions 61 and 62 of Figure 1, by combining the motion of the plate 3 in the direction of the arrow F and the raising and lowering motions, with respect to said plate, of said punch 6, will allow to cut from said plate the molded piece 5.

However, it should apparent that if the width L₃ of the plate would be modified with respect to the shown width (which operation would be possible owing to the variable distance provided by the system supporting said chains 1 and 2 on the thermoforming machine), then the cutting operation would be hindered by the interference of the punch 6 against the mentioned chains (case in which L₆ > L₃), or the cutting length would not be sufficient to separate the molded piece from the plate (case in which L₆ < L₃).

In order to overcome the above mentioned drawback, and to provide an all-purpose cutting system, thereby mating it to different size of the plate 3, the inventive machine is provided with the punching mold shown in Figures 2 and 4.

More specifically, said punching mold comprises a punch 7, the length L₇ of which corresponds to the minimum width which can be assumed by the plate 3 conveyed by the machine. Said punch, moreover, can be driven above the plastic material plate 3, in a cross direction with respect to the feeding direction F of said plate (arrow F1 of Figure 2), to cover the overall width L₃ of said plate.

In the exemplary embodiment shown in Figure 2, the length L₇ of the punch corresponds substantially to a half of the length L₃ of the plate. Thus, the displacement of the punch 7, in the direction of the arrow F1, from the position 71 to the position (aligned therewith) 72 of Figure 2, would not cause any overlapping of said positions.

However, it would be apparent that if L₃ < 2L₇, then such an overlapping would occur, and the displacement of the punch 7, in the direction of the arrow F1, would be less than that shown in Figure 2.

The feeding of the plate 3 in the direction of the arrow F will bring the punch 7 to the cutting position 73 and then, with the plate in a stop condition and a displacement in a direction opposite to that of the arrow F1 (arrow F2 of Figure 2), the punch will cut through the plate 3 at the position 74 aligned with the previous position.

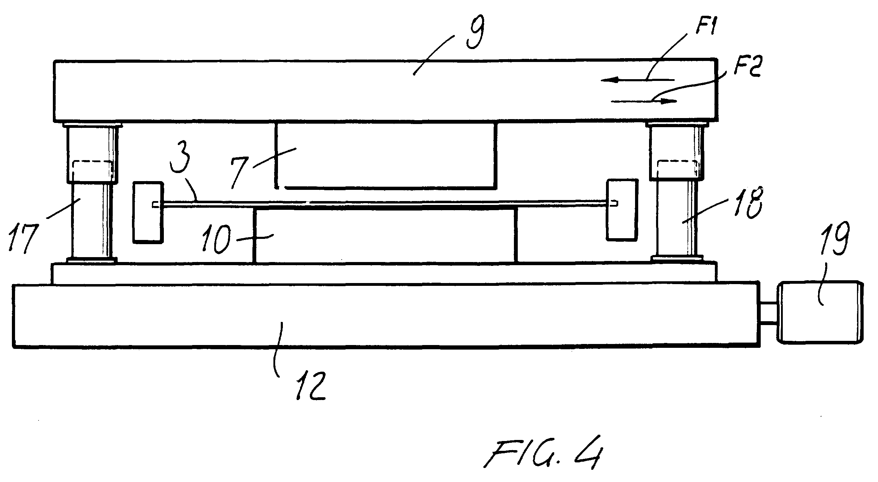

As is clearly shown in Figure 3, the punch 7 is slidably supported on guides 8 of a top movable panel 9, and operates against a corresponding die 10, in turn slidably supported on guides 11 of a respective bottom movable panel 12.

The displacements of the punch 7 and of the die 10 in the directions of the arrows F1, F2 of Figures 2 and 3 is made by suitable driving devices 13, 14, of a pneumatic, hydraulic type, or any other suitable type, in turn adapted to cooperate with limit or end of stroke systems, respectively 15 and 16, adapted to be adjustably arranged depending on the width of the cut to be performed. Said driving devices 13, 14 could also comprise a ball circulating screw or an electronic position controlling system. In the latter case, the ball circulation screws would not be necessary.

In the exemplary embodiment shown in Figure 4, the movable panels 9 and 12 are coupled to one another, in a sliding manner, by coupling columns 17 and 18. In this embodiment, the panels 9 and 10 can be driven both vertically and horizontally (i.e. on the plane of the plate 3) and the die 10 and punch 7 are supported rigidly with said movable panels. A single drive unit 19, for example on the bottom movable panel 12, will be sufficient to drive the punch 7 and die 10 in the direction of the arrows F1 and F2.

While the invention has been disclosed and illustrated with reference to preferred embodiments thereof, it should be apparent that the disclosed embodiments are susceptible to several modifications and variations all coming within the scope of the invention.

Thus, for example, the mutual positions of the punch and die could be reversed, and the driving of said punch and die could be performed by any suitable means, to provide a driving stroke thereof corresponding to the preset width of the plate being processed.

## Claims

1. A thermoforming machine for thermoforming a plate or coil plastic material, characterized in that said thermoforming machine is provided with cutting means for cutting said plastic material in a cross direction of said plastic material and with an adjustable cutting length, which can be adjusted depending on a width of said plastic material.

2. A thermoforming machine according to Claim 1, characterized in that said cutting means comprise a punch having a length corresponding to a minimum width of said plastic material, said punch being moreover provided with driving means for driving said punch in a cross direction with respect to said plastic material, so as to cover a full width of said plastic material.

3. A thermoforming machine according to Claim 2, characterized in that said driving means comprise a pneumatic, hydraulic operating device, cooperating with limit elements.

4. A thermoforming machine according to Claim 2, characterized in that said driving means comprise a ball recirculating screw.

5. A thermoforming machine according to Claim 1, characterized in that said thermoforming machine comprises moreover a die designed for cooperating with said punch, said die being driven in a same direction as said punch transversely of said plastic material.

6. A thermoforming machine according to Claim 5, characterized in that said punch and die are slidably supported on respective supporting guides of corresponding supporting movable panels.

7. A thermoforming machine according to Claim 6, characterized in that said thermoforming machine comprises moreover column means for supporting said movable panels, said punch and die being coupled to said movable panels, a drive unit being moreover provided for driving said movable panels in a cross direction of said plastic material.

8. A method for thermoforming a sheet plastic material by a thermoforming machine according to Claim 1, characterized in that said method comprises a cutting step for cutting said plastic material by a cutting punch having a length less than a width of said plastic material and movable transversely of a feeding direction of said plastic material, thereby covering an operating path at least equal to said width.

9. A method according to Claim 8, characterized in that said punch is arranged at a starting cutting position and being then displaced, in a set direction, to a cut position aligned with said starting position and sufficient to cover, in combination with said starting position, a set width of said plastic material to be cut.

10. A method according to Claim 9, characterized in that said sheet plastic material is fed in a preset direction to bring said sheet plastic material to said cutting position by said punch, said punch being then driven toward a further cutting position aligned with said cutting position and sufficient to cover, in combination with the latter, the width of said plastic material to be cut.
